# EUROPEAN PATENT APPLICATION

(11) **EP 1 826 191 A2**
(43) Date of publication of application: **29.08.2007**
(21) Application number: 07103200.7
(22) Date of filing: 28.02.2007
(51) Int. Cl.: C04B 35/468, H01G 4/12, H01G 4/30

(54) **Dielectric ceramic composition, electronic device and the production method**

(30) Priority: 28.02.2006 JP 2006053973
(71) Applicant: TDK Corporation, Tokyo 103-8272 (JP)
(72) Inventor: Kojima, Mitsuru, Tokyo Tokyo 103-8272 (JP); Yanagida, Miyuki, Tokyo Tokyo 103-8272 (JP); Hara, Haruya, Tokyo Tokyo 103-8272 (JP); Watanabe, Yasuo, Tokyo Tokyo 103-8272 (JP); Sato, Akira, Tokyo Tokyo 103-8272 (JP)
(74) Representative: Vossius & Partner

(57) **Abstract**

A production method of a dielectric ceramic composition comprising a main component including barium titanate expressed by a composition formula of BaₘTiO₂+ₘ, wherein "m" satisfies 0.990 < m < 1.010, and a fourth subcomponent including an oxide of R (note that R is at least one kind selected from Y, La, Ce, Pr, Nd, Pm, Sm, Eu, Gd, Tb, Dy, Ho, Er, Tm, Yb and Lu); comprising the step of obtaining a post-reaction material by bringing a material of said main component react with at least a part of a material of said fourth subcomponent in advance: by which it is possible to provide a dielectric ceramic composition having improved specific permittivity without deteriorating other electric characteristics (for example, a temperature characteristic of capacitance, insulation resistance, an accelerated lifetime of insulation resistance and a dielectric loss).

## Description

The present invention relates to a dielectric ceramic composition used as a dielectric layer of an electronic device, such as a multilayer ceramic capacitor, a production method thereof, and an electronic device comprising the dielectric ceramic composition as the dielectric layer.

### 2. Description of the Related Art

A multilayer ceramic capacitor as an example of electronic devices is produced, for example, by printing internal electrodes in a predetermined pattern on a ceramic green sheet formed by a predetermined dielectric ceramic composition, alternately stacking the results to make it as one body, and co-firing a thus obtained green chip. Since internal electrode layers of the multilayer ceramic capacitor are formed to be one body with ceramic dielectric by firing, materials not reacting with the ceramic dielectric has to be selected. Therefore, in the related art, it has been necessary to use expensive precious metals, such as platinum and palladium, as the material composing the internal electrode layer.

In recent years, however, dielectric ceramic compositions using inexpensive base metals, such as nickel and copper, have been developed and a drastic reduction of costs has been realized.

Also, in recent years, demands for downsizing of electronic devices have become stronger along with electronic circuits becoming higher in density, and multilayer ceramic capacitors have rapidly become downsized with a larger capacity. To attain a downsized multilayer ceramic capacitor with a larger capacity, a method of making dielectric layers thinner and a method of heightening specific permittivity of a dielectric ceramic composition included in dielectric layers, etc. have been generally used. However, when dielectric layers are made thin, an electric field imposed on the dielectric layers becomes stronger at the time of applying a direct current voltage, consequently, there has been a disadvantage that a change of the specific permittivity with time, that is, a change of the capacity with time becomes remarkably large.

To improve a change of the capacity with time under a direct current voltage, there has been proposed a method of using dielectric particles having a small average crystal grain diameter as dielectric particles to be included in the dielectric layers (for example, refer to the Japanese Unexamined Patent Publication No. H08-124785). The Japanese Unexamined Patent Publication No. H08-124785 discloses a dielectric ceramic composition having a specific composition, wherein an average crystal grain diameter of the dielectric particles is 0.45µm or smaller. However, the dielectric ceramic composition described in the article has too low specific permittivity to respond to downsizing and obtaining of a larger capacity.

An object of the present invention is to provide a dielectric ceramic composition, wherein specific permittivity can be improved without deteriorating other electric characteristics (for example, temperature characteristic of capacitance, insulation resistance, an accelerated lifetime of insulation resistance and a dielectric loss), and a production method thereof. Another object of the present invention is to provide an electronic device, such as a multilayer ceramic capacitor, comprising a dielectric layer formed by the dielectric ceramic composition as above.

To attain the above objects, according to the present invention, there is provided a production method of a dielectric ceramic composition for producing a dielectric ceramic composition comprising
a main component including barium titanate expressed by a composition formula of BaₘTiO_{2+m,} wherein "m" satisfies 0.990 < m < 1.010, and
a fourth subcomponent including an oxide of R (note that R is at least one kind selected from Y, La, Ce, Pr, Nd, Pm, Sm, Eu, Gd, Tb, Dy, Ho, Er, Tm, Yb and Lu);
wherein a material of the main component is brought to react with at least a part of a material of the fourth subcomponent in advance to obtain a post-reaction material and the post-reaction material is used for the production method.

In the present invention, by bringing a material of the main component react with at least a part of a material of the fourth subcomponent in advance, the fourth subcomponent can at least exist inside of particles of the main component. Note that it is sufficient if the fourth subcomponent at least exists inside of the particles of the main component after the reaction. Namely, the fourth subcomponent may be segregated inside the main component particles, uniformly included therein, or in a state where the component ratio gradually changes. As a result, the specific permittivity can be improved without deteriorating other electric characteristics (for example, a temperature characteristic of capacitance, insulation resistance, an accelerated lifetime of insulation resistance and a dielectric loss).

Furthermore, by setting a value of "m" in the composition formula of BaₘTiO₂₊ₘ to be in the above range, the temperature characteristic of capacitance and accelerated lifetime of insulation resistance can become preferable while keeping the specific permittivity high.

In the present invention, preferably, a material of the main component and at least a part of a material of the fourth subcomponent are dispersed as solid solution in advance to obtain a post-reaction material and the post-reaction material is used for the production method. By dispersing as solid solution, the fourth subcomponent can be uniformly dispersed in the main component and the electric characteristics as above can be furthermore improved.

In the present invention, the word "reaction" is used based on a concept of including solid solution and coating, etc. and includes a method for creating a state where the fourth subcomponent exists inside the main component particles.

The present invention preferably comprises the steps of preparing a post-reaction material obtained by bringing a material of the main component react with a part of a material of the fourth subcomponent to be included in the dielectric ceramic composition in advance, and
adding to the post-reaction material remaining material of the fourth subcomponent to be included in the dielectric ceramic composition.

In the present invention, the fourth subcomponent material to be brought to react with the main component material is not the all of the fourth subcomponent to be included in the dielectric ceramic composition and is preferably a part thereof. Then, preferably, the remaining fourth subcomponent material is added to the obtained post-reaction material, preliminary firing is performed in accordance with need and, then, firing is performed. As a result, effects of the present invention can be enhanced.

In the present invention, a content of the fourth subcomponent in finally obtained the dielectric ceramic composition is preferably 0.1 to 10 moles, and more preferably 0.2 to 6 moles when calculated as a conversion of R with respect to 100 moles of the main component.

In the present invention, by setting the content of the fourth subcomponent to be included in the dielectric ceramic composition to be in the above range, a temperature characteristic of the capacitance can be improved. When the content of the fourth subcomponent is too small, the effect of adding the fourth subcomponent cannot be obtained, while when too much, the sinterability tends to decline.

In the present invention, preferably, a content of the fourth subcomponent to be brought to react with a material of the main component in advance is 0 to 0.5 mole (note that 0 is not included) when calculated as a conversion of R with respect to 100 moles of the main component.

Alternately, in the present invention, preferably, a ratio of the fourth subcomponent to be brought to react with a material of the main component in advance is 0 to 50 mole% (note that 0 and 50 are not included), and more preferably 0 to 25 mole% (note that 0 is not included) when calculated as a conversion of R with respect to a total amount of 100 mole% of the fourth subcomponent to be finally included in the dielectric ceramic composition.

When the content of the fourth subcomponent material to be brought to react with the main component material in advance is too much, a crystal grain diameter becomes too large in a sintered body obtained after firing, and it is liable that the temperature characteristic declines and the insulation resistance (IR) declines.

In the present invention, preferably, the dielectric ceramic composition furthermore comprises
a first subcomponent including at least one kind selected from MgO, CaO, BaO and SrO,
a second subcomponent including SiO₂ mainly and at least one kind selected from MO (note that M is at least one kind selected from Mg, Ca, Ba and Sr), Li₂O and B₂O₃, and
a third subcomponent including at least one kind selected from V₂O₅ MoO₃ and WO₃;
wherein ratios of the respective subcomponents with respect to 100 moles of the main component are
the first subcomponent: 0.1 to 5 moles,
the second subcomponent: 0.1 to 12 moles, and
the third subcomponent: 0 to 0.3 mole (note that 0 is not included).

In the present invention, preferably, the dielectric ceramic composition furthermore comprises a fifth subcomponent including at least one kind selected from MnO and Cr₂O₃ ; and
a ratio of the fifth subcomponent with respect to 100 moles of the main component is 0.05 to 1.0 mole.

In the present invention, as a result that the first to third subcomponents (more preferably, furthermore the fifth subcomponent) are included in addition to the fourth subcomponent, a temperature characteristic of the capacitance can be improved and, in particular, the X7R characteristics (-55 to 125°C and ΔC = within ±15%) can be satisfied. Note that adding timing of the first to third and fifth subcomponents is not particularly limited, but they are preferably added to the post-reaction material obtained after the reaction of the main component material and at least a part of the fourth subcomponent material.

In the present invention, preferably, a material having an average particle diameter of 0.05 to 0.5µm, and more preferably 0.1 to 0.4µm, is used as a material of the main component. By using a main component material having an average particle diameter in the above range, an average crystal grain diameter of dielectric particles after sintering can be preferably made as fine as 0.1 to 0.3µm, so that a change of the specific permittivity with time can be reduced.

A dielectric ceramic composition according to the present invention is a dielectric ceramic composition produced by any one of the methods explained above.

An electronic device according to the present invention comprises a dielectric layer composed of the dielectric ceramic composition explained above. The electronic device is not particularly limited and multilayer ceramic capacitors, piezoelectric elements, chip inductors, chip varisters, chip thermisters, chip resistors and other surface mounted (SMD) chip type electronic devices may be mentioned.

According to the present invention, a material of the main component and at least a part of a material of the fourth subcomponent are brought to react in advance, so that a dielectric ceramic composition capable of improving the specific permittivity without deteriorating other electric characteristics (for example, temperature-characteristics of capacitance, insulation resistance, an accelerated lifetime of insulation resistance and a dielectric loss) and a production method thereof can be provided. Furthermore, by setting a value of "m" in the composition formula BaₘTiO₂₊ₘ to be in a specific range, the specific permittivity can be maintained particularly high, and a temperature characteristic of the capacitance and an accelerated lifetime of insulation resistance can become preferable. Also, according to the present invention, it is also possible to provide an electronic device, such as a multilayer ceramic capacitor, comprising a dielectric layer formed by the dielectric ceramic composition as above.

These and other objects and features of the present invention will become clearer from the following description of the preferred embodiments given with reference to the attached drawing, in which:

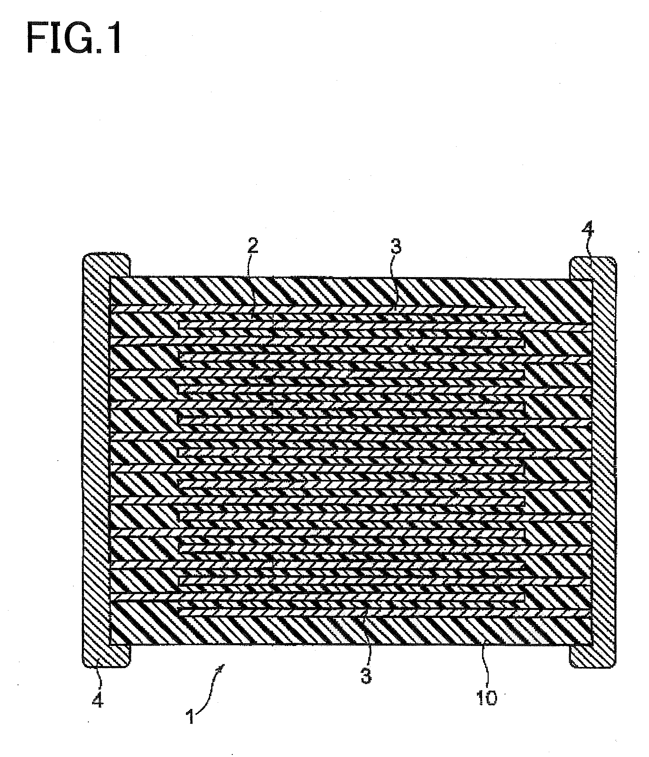

FIG. 1 is a sectional view of a multilayer ceramic capacitor according to an embodiment of the present invention.

### Multilayer Ceramic Capacitor 1

As shown in FIG. 1, a multilayer ceramic capacitor 1 according to an embodiment of the present invention has a capacitor element body 10 configured by alternately stacking dielectric layers 2 and internal electrode layers 3. On both end portions of the capacitor element body 10, a pair of external electrodes 4 respectively conducting to the internal electrode layers 3 alternately arranged inside the element body 10 are formed. A shape of the capacitor element body 10 is not particularly limited but is normally a rectangular parallelepiped shape. Also, a size thereof is not particularly limited and may be suitably determined in accordance with the use object.

The internal electrode layers 3 are stacked, so that respective end surfaces thereof are exposed to surfaces of two facing end portions of the capacitor element body 10. The pair of external electrodes 4 are formed on both end portions of the capacitor element body 10 and connected to the exposed end surfaces of the alternately arranged internal electrode layers 3 so as to configure a capacitor circuit.

### Dielectric Layer 2

The dielectric layers 2 include a dielectric ceramic composition.
In the present embodiment, the dielectric ceramic composition includes a main component including barium titanate expressed by a composition formula BaₘTiO₂₊ₘ, wherein "m" satisfies 0.990 < M < 1.010, a fourth subcomponent including an oxide of R (note that R is at least one kind selected from Y, La, Ce, Pr, Nd, Pm, Sm, Eu, Gd, Tb, Dy, Ho, Er, Tm, Yb and Lu) and other subcomponents.

As the main component, barium titanate expressed by a composition formula BaₘTiO₂₊ₘ, wherein "m" satisfies 0.990 < M < 1.010, is included. The "m" indicates a mole ratio of Ba and Ti, that is, Ba/Ti and preferably satisfies 0.990 < m < 0.995, and 0.995 ≤ m ≤ 1.005. When the "m" value is in the above range, the specific permittivity can be maintained high, and a temperature characteristic of capacitance and IR accelerated lifetime can become preferable. When the "m" value is too small, dielectric particles result in grain growth and the IR accelerated lifetime tends to be deteriorated; while when too large, sinterability declines, and the permittivity and IR accelerated lifetime tend to deteriorate.

The fourth subcomponent includes an oxide of R. An R element of the oxide of R is at least one kind of element selected from Y, La, Ce, Pr, Nd, Pm, Sm, Eu, Gd, Tb, Dy, Ho, Er, Tm, Yb and Lu. Among them, Y, Pm, Sm, Eu, Gd, Tb, Dy, Ho, Er, Tm, Yb and Lu are preferable and Y, Tb and Yb are furthermore preferable.

The fourth subcomponent has an effect of improving the IR accelerated lifetime characteristic. A content of the fourth subcomponent is preferably 0.1 to 10 moles, and more preferably 0.2 to 6 moles, when calculated in conversion of R. When the content is too small, the effect of adding the fourth subcomponent cannot be obtained and the capacity-temperature characteristic declines. While when the content is too large, the sinterability tends to deteriorate. Note that, as will be explained later on, the production method of the present embodiment comprises a step of bringing at least a part of a material of the fourth subcomponent react with a material of the main component in advance.

In the present embodiment, preferably, the first to third and fifth subcomponents below are furthermore included in addition to the fourth subcomponent including the oxide of R.

Namely, it is preferable to furthermore comprise
a first subcomponent including at least one kind selected from MgO, CaO, BaO and SrO,
a second subcomponent including SiO₂ mainly and at least one kind selected from MO (note that M is at least one kind selected from Mg, Ca, Ba and Sr), Li₂O and B₂O₃,
a third subcomponent including at least one kind selected from V₂O₅, MoO₃ and WO₃, and
a fifth subcomponent including at least one kind selected from MnO and Cr₂O₃.

Ratios of the respective subcomponents to the main component are, when calculated as a conversion of each oxide,
the first subcomponent: 0.1 to 5 moles,
the second subcomponent: 0.1 to 12 moles,
the third subcomponent: 0 to 0.3 mole (note that 0 is not included), and
the fifth subcomponent: 0.05 to 1.0 mole; and more preferably,
the first subcomponent: 0.2 to 4 moles,
the second subcomponent: 1 to 6 moles,
the third subcomponent: 0 to 0.25 mole (note that 0 is not included), and
the fifth subcomponent: 0.05 to 0.4 mole with respect to 100 moles of the main component.

In the present embodiment, as a result that the first to third and fifth subcomponents are furthermore included in the dielectric ceramic composition in addition to the fourth subcomponent including the oxide of R, a temperature characteristic of the capacitance can be improved and, preferably, the X7R characteristics (-55 to 125°C and ΔC = within ±15%) of the EIA standard can be satisfied.

Note that, in the present specification, oxides composing the main component and subcomponents are expressed by a stoichiometric composition, but an oxidization state of each of the oxides may be deviated from the stoichiometric composition. Note that the above ratios of the respective subcomponents are obtained by calculating as a conversion of oxides having stoichiometric composition based on metal amounts included in the oxides composing the subcomponents.

The reasons of limiting contents of the subcomponents are as below.

When a content of the first subcomponent (MgO, CaO, BaO and SrO) is too small, the temperature change rate of capacitance becomes high. On the other hand, when the content is too much, it is liable that the sinterability declines and the high temperature load lifetime deteriorates. Note that component ratios of respective oxides in the first subcomponent may be any.

The second subcomponent includes SiO₂ as the main component and at least one kind selected from MO (note that M is at least one kind selected from Mg, Ca, Ba and Sr), Li₂O and B₂O₃. The second subcomponent mainly acts as a sintering aid. The first subcomponent also includes MO (note that M is at least one kind selected from Mg, Ca, Ba and Sr), but when MO is made to be a composite oxide with SiO₂ and to be a compound expressed by a composition formula MₓSiO₂₊ₓ, the melting point can be lowered. Since the melting point can be lowered, reactivity with the main component can be improved. Note that when using BaO and CaO as the MO, the composite oxide is preferably a compound expressed by a composition formula of (Ba, Ca)ₓSiO₂₊ₓ. The "x" in the composition formula of (Ba, Ca)ₓSiO₂₊ₓ is preferably 0.8 to 1.2, and more preferably 0.9 to 1.1. When the "x" is too small, that is, when the content of SiO₂ is too much, it reacts with the main component BaₘTiO₂₊ₘ to deteriorate the dielectric characteristic. On the other hand, when the "x" is too large, the melting point becomes high to deteriorate the sinterability, which is unfavorable.

The third subcomponent (V₂O₅, MoO₃ and WO₃) exhibits an effect of flattening the capacity-temperature characteristic at the Curie's temperature or higher and an effect of improving the high temperature load lifetime. When a content of the third subcomponent is too small, the effects become insufficient. On the other hand, when the content is too large, the IR declines remarkably. Note that component ratios of respective oxides in the third subcomponent may be any.

The fifth subcomponent (MnO and Cr₂O₃) has effects of shifting the Curie's temperature to the high temperature side, flattening the capacity-temperature characteristic, improving the insulation resistance (IR), improving the breakdown voltage and lowering the firing temperature, etc.

An average crystal grain diameter of dielectric particles included in the dielectric ceramic composition is not particularly limited, but 0.1 to 0.3µm is preferable. When the average crystal grain diameter is too small, the specific permittivity tends to become low, while when too large, a change of specific permittivity with time tends to become large. An average crystal grain diameter of the dielectric particles can be measured by the code method for measuring an average particle diameter, for example, from a SEM image of the dielectric particles on an assumption that shapes of the dielectric particles are sphere.

A thickness of the dielectric layers 2 is not particularly limited, but 4.5µm or thinner per one layer is preferable, 3.5µm or thinner is more preferable, and 3.0µm or thinner is furthermore preferable. A lower limit of the thickness is not particularly limited and is, for example, 0.5µm or so.

The number of stacked layers of the dielectric layers 2 is not particularly limited, but 20 or larger is preferable, 50 or larger is more preferable, and 100 or larger is particularly preferable. An upper limit of the number of stacked layers is not particularly limited and is, for example, 2000 or so.

### Internal Electrode Layer 3

A conductive material included in the internal electrode layers 3 is not particularly limited, but since components of the dielectric layers 2 has reduction-resistance, relatively inexpensive base metals may be used. As base metals to be used as the conductive material, Ni or a Ni alloy is preferable. As a Ni alloy, alloys of one or more kinds of elements selected from Mn, Cr, Co and Al with Ni are preferable, and a Ni content in the alloy is preferably 95 wt% or larger. Note that Ni or a Ni alloy may include a variety of trace components, such as P, in an amount of not larger than 0.1 wt% or so. A thickness of the internal electrode layers 3 may be suitably determined in accordance with the use object, etc., but normally it is 0.1 to 3µm, and particularly 0.2 to 2.0µm or so is preferable.

### External Electrode 4

A conductive material to be included in the external electrodes 4 is not particularly limited and inexpensive Ni, Cu and alloys of these may be used in the present invention. A thickness of the external electrodes 4 may be suitably determined in accordance with the use object, etc. but normally 10 to 50µm or so is preferable.

### Production Method of Multilayer Ceramic Capacitor

A multilayer ceramic capacitor of the present embodiment is produced by producing a green chip by a normal printing method or a sheet method using paste, firing the result, printing or transferring external electrodes and firing in the same way as in the multilayer ceramic capacitor in the related arts. Below, the production method will be explained specifically.

First, a dielectric ceramic composition powder included in the dielectric layer paste is fabricated.

In the present embodiment, the dielectric ceramic composition powder is fabricated as below. First, a material of the main component and a part of a material of the fourth subcomponent (a material corresponding to a part of the fourth subcomponent to be included in the dielectric ceramic composition) are brought to react or preferably dispersed as solid solution in advance, so that a post-reaction material is obtained. Next, the post-reaction material is added with the remaining fourth subcomponent material (remaining material in the fourth subcomponent for composing the dielectric ceramic composition) and the above first to third and fifth subcomponent materials and subjected to preliminarily firing if necessary, so that a dielectric ceramic composition powder is fabricated.

As the above main component material, a BaₘTiO₂₊ₘ powder or a compound powder to be BaₘTiO₂₊ₘ when fired may be used, and an average particle diameter of the main component material is preferably 0.05 to 0.5µm, and more preferably 0.1 to 0.4µm. When an average particle diameter of the main component material is too large, an average crystal grain diameter of dielectric particles after sintering becomes too large and it is liable that the temperature characteristic is deteriorated and the insulation resistance (IR) declines. While, when the average particle diameter is too small, reaction of the main component material and an oxide of R tends to become uneven. Note that, in the present embodiment, the average particle diameter means a volume-reduced cumulative 50% diameter (D50 diameter), which can be measured by a laser diffraction method, etc. using light scattering.

As the fourth subcomponent material to be brought to react with the main component material in advance, the oxides of R as above and a variety of compounds to be the oxides of R when fired may be used. As the oxides of R and the compounds to be the oxides of R when fired, powder materials having an average particle diameter of 0.01 to 0.1µm or so or sol materials mentioned below, etc. may be used.

The sol materials are not particularly limited and, for example, hydroxide sol and oxide sol, etc. may be mentioned. Also, a sol particle diameter of the sol materials is normally 1 to 100nm or so, and as the solvent, water; methanol, ethanol and other alcohols; xylene, toluene and other aromatic solvents, methylethylketone and other ketones; and other organic based solvents may be mentioned.

The compounds to be the oxides of R when fired are not particularly limited, and alkoxide of R and inorganic salt of R, etc. may be mentioned.

The alkoxide of R is a compound of alcohol and an R element and specifically a compound, wherein hydrogen of a hydroxyl group in alcohol is substituted by an R element. Alkoxide of R is not particularly limited and a variety of compounds expressed by a general formula of CₙH₂ₙ₊₁OR (n is an integer from 1 to 9) may be used, for example, CH₃OR, C₂H₅OR, n-C₃H₇OR, i-C₃H₇OR, etc. may be mentioned.

Also, the inorganic salt of R is not particularly limited and, for example, chlorides, nitrites, phosphates, sulfates, etc. may be mentioned. Note that inorganic salts of R are often in a hydrated state and normally used in a state of dissolved in water or a water-soluble organic solvent, etc.

The fourth subcomponent material to be brought to react with the main component material in advance is preferably 0 to 0.5 mole (note that 0 is not included), and more preferably 0.01 to 0.2 mole when calculated as a conversion of R with respect to 100 moles of the main component.

Alternately, preferably, a ratio of the fourth subcomponent material to be brought to react in advance is 0 to 50 mole% (note that 0 and 50 are not included) when calculated as a conversion of R with respect to a total amount of 100 mole% of the fourth subcomponent to be finally included in the dielectric ceramic composition, more preferably 0 to 25 mole% (note that 0 is not included) and furthermore preferably 0 to 15 mole% (note that 0 is not included).

When an amount of the fourth subcomponent material to be brought to react with the main component in advance is too much, a crystal grain diameter of a sintered body to be obtained after firing becomes too large and it is liable that the temperature characteristic declines and the insulation resistance (IR) declines.

As a method of obtaining the post-reaction material by bringing the main component material react with a part of the fourth subcomponent material, a method of mixing the main component material and the fourth subcomponent material by using a solvent, etc., evaporating the solvent and performing preliminary firing and a method of adding a precipitant to a mixed solution, depositing the fourth subcomponent on the main component and performing preliminary firing, etc. may be mentioned. Note that a temperature at the preliminary firing is preferably 500 to 700°C or so.

Next, by adding the remaining fourth subcomponent material (remaining material of the fourth subcomponent for composing the dielectric ceramic composition) and the first to third and fifth subcomponent materials to the obtained post-reaction material and, then, mixing and, performing preliminary firing if necessary, a dielectric ceramic composition powder is obtained. As the remaining fourth subcomponent material and the first to third and fifth subcomponent materials, the above oxides, mixture of them, composite oxides, and a variety of compounds to be the oxides and composite oxides when fired may be used.

Next, the thus obtained dielectric ceramic composition powder is used to produce dielectric layer paste. The dielectric layer paste may be organic based slurry obtained by kneading the dielectric ceramic composition powder and an organic vehicle, or water-based slurry.

An organic vehicle is obtained by dissolving a binder in an organic solvent. The binder to be used for the organic vehicle is not particularly limited and may be suitably selected from a variety of normal binders, such as ethyl cellulose and polyvinyl butyral. Also, the organic solvent to be used is not particularly limited and may be suitably selected from a variety of organic solvents, such as terpineol, butyl carbitol, acetone, and toluene, in accordance with a method to be used, such as the printing method and sheet method.

Also, when using water-based slurry as a dielectric layer paste, a water-based vehicle obtained by dissolving a water-soluble binder and dispersant, etc. in water may be kneaded with a dielectric material. The water-soluble binder used for the water based vehicle is not particularly limited and, for example, polyvinyl alcohol, cellulose and water-soluble acrylic resin, etc. may be used.

The internal electrode layer paste is fabricated by kneading a conductive material formed by the above variety of conductive metals and alloys or a variety of oxides, organic metal compounds, and resinates, etc., which become the above conductive materials after firing, with the above organic vehicle.

The external electrode paste may be fabricated in the same way as the above internal electrode layer paste.

A content of the organic vehicle in the above variety of paste is not particularly limited and may be a normal content, for example, the binder may be 1 to 5 wt% or so and the solvent may be 10 to 50 wt% or so. Also, additives selected from a variety of dispersants, plasticizers, dielectrics and insulators, etc. may be included in each paste. A total content thereof is preferably 10 wt% or smaller.

When using the printing method, the dielectric layer paste and the internal electrode layer paste are stacked by printing on a substrate, such as PET, cut into a predetermined shape and removed from the substrate to obtain a green chip.

When using the sheet method, the dielectric layer paste is used to form a green sheet, the internal electrode layer paste is printed thereon and, then, the results are stacked to obtain a green chip.

Before firing, binder removal processing is performed on the green chip. As a binder removal condition, the temperature raising rate is preferably 5 to 300°C/hour and more preferably 10 to 100°C/hour, the holding temperature is preferably 180 to 400°C and more preferably 200 to 300°C, and the temperature holding time is preferably 0.5 to 24 hours and more preferably 5 to 20 hours. The firing atmosphere at binder removal processing is preferably in the air.

Next, the green chip subjected to the binder removal processing is fired. An atmosphere at firing the green chip may be suitably determined in accordance with a kind of a conductive material in the internal electrode layer paste, but when using a base metal, such as Ni or a Ni alloy, as the conductive material, an oxygen partial pressure in the firing atmosphere is preferably 10⁻⁹ to 10⁻⁴ Pa. When the oxygen partial pressure is lower than the above range, the conductive material in the internal electrode layer results in abnormal sintering to be broken in some cases. While, when the oxygen partial pressure exceeds the above range, the internal electrode layer tends to be oxidized.

Also, the holding temperature at firing is preferably 1000 to 1400°C, and more preferably 1100 to 1350°C. When the holding temperature is lower than the above range, densification becomes insufficient, while when exceeding the above range, breakings of electrodes due to abnormal sintering of the internal electrode layer, deterioration of capacity-temperature characteristics due to dispersion of the internal electrode layer component, and reduction of the dielectric ceramic composition are easily caused.

As other firing condition, the temperature raising rate is preferably 100 to 900°C/hour and more preferably 200 to 900°C/hour, the temperature holding time is preferably 0.5 to 8 hours and more preferably 1 to 3 hours, and the cooling rate is preferably 50 to 500°C/hour and more preferably 200 to 300°C/hour. The firing atmosphere is preferably a reducing atmosphere and a preferable atmosphere gas is, for example, a wet mixed gas of N₂ and H₂.

When firing in a reducing atmosphere, it is preferable that annealing is performed on the capacitor element body. Annealing is processing for re-oxidizing the dielectric layer and the IR lifetime is remarkably elongated thereby, so that the reliability is improved.

An oxygen partial pressure in the annealing atmosphere is preferably 10⁻³ Pa or higher, and particularly preferably 10⁻² to 10 Pa. When the oxygen partial pressure is lower than the above range, re-oxidization of the dielectric layer becomes difficult, while when exceeding the above range, the internal electrode layer tends to be oxidized.

The holding temperature at annealing is preferably 1200°C or lower, and particularly preferably 500 to 1200°C. When the holding temperature is lower than the above range, oxidization of the dielectric layer becomes insufficient, so that the IR becomes low and the high temperature load lifetime becomes short easily. On the other hand, when the holding temperature exceeds the above range, not only the internal electrode layer is oxidized to reduce the capacity, but the internal electrode layer reacts with the dielectric base material, and deterioration of the capacity-temperature characteristics, a decline of the IR and a decline of the high temperature load lifetime are easily caused.

As other annealing conditions, the temperature raising rate is preferably 100 to 900°C/hour and more preferably 200 to 900°C/hour, the temperature holding time is preferably 0.5 to 12 hours and more preferably 1 to 10 hours, and the cooling rate is preferably 50 to 600°C/hour and more preferably 100 to 300°C/hour. Also, a preferable atmosphere gas at annealing is, for example, a wet N₂ gas, etc.

In the above binder removal processing, firing and annealing, for example, a wetter, etc. may be used to wet the N₂ gas and mixed gas, etc. In that case, the water temperature is preferably 5 to 75°C or so.

The binder removal processing, firing and annealing may be performed continuously or separately.

End surface polishing, for example, by barrel polishing or sand blast, etc. is performed on the capacitor element body obtained as above, and the external electrode paste is printed or transferred and fired to form external electrodes 4. A firing condition of the external electrode paste is preferably, for example, at 600 to 800°C in a wet mixed gas of N₂ and H₂ for 10 minutes to 1 hour or so. A cover layer is formed by plating, etc. on the surface of the external electrodes 4 if necessary.

A multilayer ceramic capacitor of the present invention produced as above is mounted on a print substrate, etc. by soldering, etc. and used for a variety of electronic apparatuses, etc.

An embodiment of the present invention was explained above, but the present invention is not limited to the above embodiment and may be variously modified within the scope of the present invention.

For example, in the above embodiment, a multilayer ceramic capacitor was explained as an example of an electronic device according to the present invention, but an electronic device according to the present invention is not limited to the multilayer ceramic capacitor and may be any as far as it includes a dielectric layer composed of a dielectric ceramic composition having the above composition.

### Examples

Below, the present invention will be explained based on furthermore detailed examples, but the present invention is not limited to the examples.

### Example 1

First, as a main component material, a material powder having an average particle diameter of 0.35µm, wherein a value of "m" in the composition formula of BaₘTiO₂₊ₘ is 0.991, was prepared. Also, as a fourth subcomponent material, a Y₂O₃ powder was prepared. Next, the prepared BaₘTiO₂₊ₘ powder (m = 0.991) and Y₂O₃ powder were pulverized by wet mixing by a ball mill to form slurry, and the slurry was dried, preliminarily fired and pulverized to obtain a post-reaction material. Note that the preliminary firing condition was a temperature raising rate of 200°C/hour, a holding temperature of 500°C, a temperature holding time of 2 hours and in the air. An adding quantity of Y₂O₃ was 0.05 mole when calculated as a conversion of Y atoms (it will be the same in examples, comparative examples and reference examples below in the specification of the present invention) with respect to 100 moles of the main component. Namely, it was 0.025 mole when calculated as a conversion of Y₂O₃.

Next, the obtained post-reaction material was added with the first to fifth subcomponent explained below and pulverized by wet mixing by a ball mill to form slurry. The slurry was dried, then, preliminarily fired and pulverized to obtain a dielectric ceramic composition powder. Note that an adding quantity of each of the subcomponents is calculated as a conversion of each oxide (note that an adding quantity of Y₂O₃ was calculated as a conversion of Y atoms) with respect to 100 moles of the main component.
MgO (first subcomponent): 1.2 moles
(Ba, Ca)SiO₃ (second subcomponent): 0.75 mole
V₂O₅ (third subcomponent): 0.03 mole
Y₂O₃ (fourth subcomponent): 0.35 mole
MnO (fifth subcomponent): 0.2 mole

The thus obtained dielectric ceramic composition powder in an amount of 100 parts by weight, an acrylic resin in an amount of 4.8 parts by weight, ethyl acetate in an amount of 100 parts by weight, mineral spirit in an amount of 6 parts by weight and toluene in an amount of 4 parts by weight were mixed by a ball mill to form paste, so that dielectric layer paste was obtained.

Next, Ni particles in an amount of 44.6 parts by weight, terpineol in an amount of 52 parts by weight, ethyl cellulose in an amount of 3 parts by weight, benzotriazole in an amount of 0.4 part by weight were kneaded by a triple-roll to form slurry, so that internal electrode layer paste was obtained.

These paste was used to produce the multilayer ceramic chip capacitor 1 shown in FIG. 1.

First, the obtained dielectric layer paste was used to form a green sheet on a PET film. After printing the internal electrode paste thereon, the sheet was removed from the PET film. Next, the green sheets and protective green sheets (without the internal electrode layer paste printed thereon) were stacked and bonded by pressure, so that a green multilayer body was obtained.

Next, the green multilayer body was cut into a predetermined size to obtain a green chip and subjected to binder removal processing, firing and annealing under the conditions below, so that a multilayer ceramic fired body was obtained.

The binder removal processing condition was a temperature raising rate of 32.5°C/hour, holding temperature of 260°C, the temperature holding time of 8 hours and in the air.

The firing condition was a temperature raising rate of 200°C/hour, holding temperature of 1260 to 1280°C, the temperature holding time of 2 hours, cooling rate of 200°C/hour, and an atmosphere of a wet mixed gas of N₂ + H₂ (oxygen partial pressure was 10⁻⁷ Pa).

The annealing condition was a temperature raising rate of 200°C/hour, holding temperature of 1050°C, the temperature holding time of 2 hours, cooling rate of 200°C/hour, and an atmosphere of a wet N₂ gas (oxygen partial pressure was 1.01 Pa) .

Note that a wetter with a water temperature of 20°C was used to wet the atmosphere gases at firing and annealing.

Next, end surfaces of the obtained multilayer ceramic fired body were polished by sand blast and, then, an In-Ga alloy was applied as external electrodes, so that samples of multilayer ceramic capacitor as an example 1 shown in FIG. 1 were obtained.

A size of the obtained capacitor samples was 3.2mm × 1.6mm × 0.6mm, the number of dielectric layers sandwiched by the internal electrode layers was 4, a thickness (interlayer thickness) of one dielectric layer was 4.5µm, and a thickness of one internal electrode layer was 1.2µm. Next, on the obtained capacitor samples, an average crystal grain diameter of dielectric particles, specific permittivity ε, a dielectric loss tanδ, insulation resistance IR, a CR product, a temperature characteristic of capacitance and an IR accelerated lifetime were evaluated by the methods explained below. Also, a distribution degree of a Y element was measured by an XPS measurement on the above post-reaction material.

### Average Crystal Grain Diameter of Dielectric Particles

A method of measuring an average particle diameter of the dielectric particles was cutting an obtained capacitor sample on a surface perpendicular to internal electrodes first, polishing the cut surface, then, performing chemical etching on the polished surface, observing by a scanning electron microscope (SEM) and calculating by the code method on an assumption that shapes of the dielectric particles are spheres. The results are shown in Table 1.

### Specific Permittivity ε

On each of the capacitor samples, capacitance C was measured under a condition of a reference temperature of 20°C, using a digital LCR meter (YHP4274A made by Yokogawa Electric Corporation), a frequency of 120 Hz and an input signal level (measurement voltage) of 0.5Vrms/µm. Then, specific permittivity (no unit) was calculated from the obtained capacitance, a dielectric thickness and a superimposing area of internal electrodes in the multilayer ceramic capacitor. The higher the specific permittivity is, the more preferable. The results are shown in Table 1.

### Dielectric Loss tanδ

On each of the capacitor samples, a dielectric loss tanδ was measured under a condition of a reference temperature of 20°C, using a digital LCR meter (YHP4274A made by Yokogawa Electric Corporation), a frequency of 120 Hz and an input signal level (measurement voltage) of 0.5Vrms/µm. The smaller the dielectric loss is, the more preferable. The results are shown in Table 1.

### Insulation Resistance IR

On each of the capacitor samples, insulation resistance IR was measured by using an insulation resistance tester (R8340A made by Advantest Corporation) after applying a direct current voltage of 4V/µm for one minute at 20°C. The larger the insulation resistance IR is, the more preferable. The results are shown in Table 1.

### CR Product

A CR product was measured by obtaining a product of the capacitance (unit: µF) and insulation resistance IR (unit: MΩ) measured as explained above. The larger the CR product is, the more preferable. The results are shown in Table 1.

### Temperature Characteristic of Capacitance

On each of the capacitor samples, capacitance at -55 to 125°C was measured and a change rate ΔC of the capacitance was calculated to evaluate whether the X7R characteristics of the EIA standard are satisfied or not. Namely, evaluation was made on whether the change rate ΔC was within ±15% or not at -55 to 125°C. The results are shown in Table 1. Note that samples satisfied the X7R characteristics were marked with "good" and those not satisfied were marked with "NG" in Table 1.

### IR Accelerated Lifetime

On each of the capacitor samples, an acceleration test was conducted under an electric field of 20V/µm at 180°C, and time (unit: hour) until the insulation resistance IR becomes 10⁸ Ω or lower was calculated. The longer the IR accelerated lifetime is, the more preferable. The results are shown in Table 1.

### Measurement of Distribution Degree of Y Atoms in Post-Reaction Material

On the post-reaction material obtained by bringing the BaₘTiO₂₊ₘ powder (m = 0.991) react with the Y₂O₃ powder, a distribution state of each element of Ba, Ti and Y in the surface depth direction was measured by the XPS measurement. From results of the XPS measurement, each of the Ba, Ti and Y elements was distributed at almost the same concentration from a part close to the surface to inside thereof, and it was confirmed that a solid dispersion reaction proceeded uniformly.

### Examples 1a to 5

Other than changing as explained below when producing a dielectric ceramic composition powder, a dielectric ceramic composition powder was obtained in the same way as in the example 1 and capacitor samples of examples la to 5 were obtained.

Namely, in the examples la to 5, post-reaction materials were obtained by respectively using materials, wherein a value of "m" in the composition formula of BaₘTiO₂₊ₘ as the main component material was changed to 0.992 (example 1a), 0.994 (example 1b), 0.995 (example 2), 1.000 (example 3), 1.005 (example 4), 1.007 (example 4a) and 1.009 (example 5).

On each of the obtained capacitor samples, evaluation was made in the same way as in the example 1 on an average crystal grain diameter of dielectric particles, specific permittivity ε, a dielectric loss tanδ, insulation resistance IR, a CR product, a temperature characteristic of capacitance and an IR accelerated lifetime. The results are shown in Table 1.

### Comparative Examples 1 and 2

Other than changing as explained below when producing a dielectric ceramic composition powder, a dielectric ceramic composition powder was obtained in the same way as in the example 1 and capacitor samples of comparative examples 1 and 2 were obtained.

Namely, in the comparative examples 1 and 2, post-reaction materials were obtained by respectively using materials, wherein a value of "m" in the composition formula of BaₘTiO₂₊ₘ as the main component material was changed to 0.990 (comparative example 1) and to 1.010 (comparative example 2).

On each of the obtained capacitor samples, evaluation was made in the same way as in the example 1 on an average crystal grain diameter of dielectric particles, specific permittivity ε, a dielectric loss tanδ, insulation resistance IR, a CR product, a temperature characteristic of capacitance and an IR accelerated lifetime. The results are shown in Table 1.

Table 1

**Table 1**

| | Main Component Ba*ₘ*TiO*₂₊ₘ* | Adding Quantity of Fourth Subcomponent [mole] | | Crystal Grain Diameter in Sintered Body [µm] | Specific Permittivity *ε* | tan δ [%] | IR [Ω·m] | CR Product [µF·MΩ] | X7R Characteristics | IR Lifetime [h] |
|---|---|---|---|---|---|---|---|---|---|---|
| | m | pre-added (Y₂O₃) | post-added (Y₂O₃) | | | | | | | |
| Comparative Example 1 | 0.990 | 0.05 | 0.35 | 0.40 | 4700 | 10.5 | 1.24E+11 | 5160 | NG | 0.80 |
| Example 1 | 0.991 | 0.05 | 0.35 | 0.39 | 4800 | 11.4 | 1.36E+11 | 5780 | Good | 1.0 |
| Example 1a | 0.992 | 0.05 | 0.35 | 0.38 | 4900 | 11.8 | 1.32E+11 | 5727 | Good | 1.1 |
| Example 1b | 0.994 | 0.05 | 0.35 | 0.36 | 5000 | 12.1 | 1.28E+11 | 5667 | Good | 1.7 |
| Example 2 | 0.995 | 0.05 | 0.35 | 0.35 | 5100 | 12.4 | 1.32E+11 | 5961 | Good | 1.9 |
| Example 3 | 1.000 | 0.05 | 0.35 | 0.31 | 4800 | 8.2 | 1.24E+11 | 5270 | Good | 1.6 |
| Example 4 | 1.005 | 0.05 | 0.35 | 0.32 | 4000 | 3.6 | 1.36E+11 | 4817 | Good | 1.3 |
| Example 4a | 1.007 | 0.05 | 0.35 | 0.32 | 3800 | 3.4 | 1.40E+11 | 4630 | Good | 0.80 |
| Example 5 | 1.009 | 0.05 | 0.35 | 0.33 | 3600 | 3.3 | 1.40E+11 | 4462 | Good | 0.20 |
| Comparative Example 2 | 1.010 | 0.05 | 0.35 | 0.34 | 3400 | 3.3 | 1.36E+11 | 4094 | Good | 0.13 |

| | | | | | | | | | | |
|---|---|---|---|---|---|---|---|---|---|---|
| In Table 1, "aE+b" means "a × 10^{+b}". | | | | | | | | | | |

### Evaluation 1

Table 1 shows an average crystal grain diameter of dielectric particles, specific permittivity ε, a dielectric loss tanδ, insulation resistance IR, a CR product, a temperature characteristic of capacitance and an IR accelerated lifetime of each of the examples 1 to 5 and comparative examples 1 and 2. Note that "aE+b" means "a × 10^{+b}" of insulation resistance IR in Table 1.

From Table 1, all of the capacitor samples in the examples 1 to 5 expressed by the composition formula BaₘTiO₂₊ₘ, wherein a value of "m" in the composition formula was 0.991 to 1.009, exhibited high specific permittivity of 3500 or higher, and other electric characteristics (a dielectric loss tanδ, insulation resistance IR, a CR product, a temperature characteristic of capacitance and an IR accelerated lifetime) were also confirmed to be preferable.

On the other hand, in the comparative example 1, wherein the value of "m" was 0.990, an average crystal grain diameter of the dielectric particles after sintering became large as 0.40µm and, furthermore, a result of a temperature characteristic of the capacitance was poor.

Also, in the comparative example 2, wherein the value of "m" was 1.010, the specific permittivity became low as 3400 and it was confirmed to be difficult to respond to downsizing and attaining of a larger capacity.

From the above results, when comparing the examples 1 to 5 with the comparative examples 1 and 2, it was confirmed that the specific permittivity could be made high while maintaining other electric characteristics (a dielectric loss tanδ, insulation resistance IR, a CR product, a temperature characteristic of capacitance and an IR accelerated lifetime) preferable by setting the value of "m" in the composition formula of BaₘTiO₂₊ₘ to be in a range of 0.990 < m < 1.010.

### Examples 6 to 8

Other than changing as explained below when producing a dielectric ceramic composition powder, a dielectric ceramic composition powder was obtained in the same way as in the example 3 and capacitor samples of examples 6 to 8 were obtained.

Namely, in the examples 6 to 8, BaₘTiO₂₊ₘ, wherein m = 1.000 as same as that in the example 3, was prepared first as the main component material. Being different from the example 3, post-reaction materials were obtained from the main component material and Y₂O₃ in an amount of 0.02 mole (example 6), 0.10 mole (example 7) and 0.15 mole (example 8), respectively. Then, being different from the example 3, a quantity of (post-added) Y₂O₃ to be added to the obtained post reaction materials was changed to 0.38 mole (example 6), 0.30 mole (example 7) and 0.25 mole (example 8).

On each of the obtained capacitor samples, evaluation was made in the same way as in the example 1 on an average crystal grain diameter of dielectric particles, specific permittivity ε, a dielectric loss tanδ, insulation resistance IR, a CR product, a temperature characteristic of capacitance and an IR accelerated lifetime. The results are shown in Table 2.

### Comparative Example 3

Other than changing as explained below when producing a dielectric ceramic composition powder, a dielectric ceramic composition powder was obtained in the same way as in the example 3 and capacitor samples of a comparative example 3 were obtained.

Namely, in the comparative example 3, BaₘTiO₂₊ₘ, wherein m = 1.000 as same as that in the example 3, was prepared first as the main component material. Without bringing the main component material react with Y₂O₃ in advance, the main component material was directly mixed with the first to fifth subcomponent materials, preliminarily fired and pulverized to obtain a dielectric ceramic composition powder. Note that an adding quantity of Y₂O₃ was 0.40 mole in the comparative example 3.

On each of the obtained capacitor samples, evaluation was made in the same way as in the example 1 on an average crystal grain diameter of dielectric particles, specific permittivity ε, a dielectric loss tanδ, insulation resistance IR, a CR product, a temperature characteristic of capacitance and an IR accelerated lifetime. The results are shown in Table 2.

### Reference Example 1

Other than changing as explained below when producing a dielectric ceramic composition powder, a dielectric ceramic composition powder was obtained in the same way as in the example 3 and capacitor samples of a reference example 1 were obtained.

Namely, in the reference example 1, BaₘTiO₂₊ₘ, wherein m = 1.000 as same as that in the example 3, was prepared first as the main component material. Being different from the example 3, an adding quantity of Y₂O₃ to be brought to react with the main component material in advance was set to 0.25 mole to obtain a post-reaction material. Also, being different from the example 3, a quantity of (post-added) Y₂O₃ to be added to the obtained post-reaction material was 0.15 mole.

On each of the obtained capacitor samples, evaluation was made in the same way as in the example 1 on an average crystal grain diameter of dielectric particles, specific permittivity ε, a dielectric loss tanδ, insulation resistance IR, a CR product, a temperature characteristic of capacitance and an IR accelerated lifetime. The results are shown in Table 2.

### Reference Example 2

Other than changing as explained below when producing a dielectric ceramic composition powder, a dielectric ceramic composition powder was obtained in the same way as in the example 3 and capacitor samples of a reference example 2 were obtained.

Namely, in the reference example 2, BaₘTiO_{2+m,} wherein m = 1.000 as same as that in the example 3, was prepared first as the main component material. Being different from the example 3, an adding quantity of Y₂O₃ to be brought to react with the main component material in advance was set to 0.40 mole to obtain a post-reaction material. Also, being different from the example 3, a dielectric ceramic composition powder was obtained without adding Y₂O₃ as the fourth subcomponent to the obtained post-reaction material.

On each of the obtained capacitor samples, evaluation was made in the same way as in the example 1 on an average crystal grain diameter of dielectric particles, specific permittivity ε, a dielectric loss tanδ, insulation resistance IR, a CR product, a temperature characteristic of capacitance and an IR accelerated lifetime. The results are shown in Table 2.

Table 2

**Table 2**

| | Main Component BaₘTiO₂₊ₘ | Adding Quantity of Fourth Subcomponent [mole] | | Crystal Grain Diameter in Sintered Body [µm] | Specific Permittivity ε | tan δ [%] | IR [Ω·m] | CR Product [µF·MΩ] | X7R Characteristics | IR Lifetime [h] |
|---|---|---|---|---|---|---|---|---|---|---|
| | m | Pre-added (Y₂O₃) | Post-added (Y₂O₃) | | | | | | | |
| Comparative Example 3 | 1.000 | 0 | 0.40 | 0.29 | 3400 | 4.6 | 1.20E+11 | 3610 | Good | 0.80 |
| Example 6 | 1.000 | 0.02 | 0.38 | 0.30 | 4000 | 6.8 | 1.20E+11 | 4250 | Good | 1.1 |
| Example 3 | 1.000 | 0.05 | 0.35 | 0.31 | 4800 | 8.2 | 1.24E+11 | 5270 | Good | 1.6 |
| Example 7 | 1.000 | 0.10 | 0.30 | 0.31 | 4928 | 11.7 | 1.20E+11 | 5240 | Good | 0.80 |
| Example 8 | 1.000 | 0.15 | 0.25 | 0.35 | 4600 | 10.0 | 1.20E+11 | 4890 | Good | 0.16 |
| Reference Example 1 | 1.000 | 0.25 | 0.15 | 0.37 | 4400 | 12.5 | 1.16E+11 | 4520 | NG | 0.08 |
| Reference Example 2 | 1.000 | 0.40 | 0 | 0.78 | 5550 | 25.2 | 2.80E+10 | 1380 | NG | 0.10 |

| | | | | | | | | | | |
|---|---|---|---|---|---|---|---|---|---|---|
| In Table 2, "aE+b" means "a × 10^{+b"}. | | | | | | | | | | |

### Evaluation 2

Table 2 shows an average crystal grain diameter of dielectric particles, specific permittivity ε, a dielectric loss tanδ, insulation resistance IR, a CR product, a temperature characteristic of capacitance and an IR accelerated lifetime of each of the examples 3 and 6 to 8, comparative example 3 and reference examples 1 and 2. Note that "aE+b" means "a × 10^{+b}" of insulation resistance IR in Table 2.

From Table 2, all of the capacitor samples in the examples 6 to 8 obtained by bringing the main component react with a part of Y₂O₃ to obtain a post-reaction material and, then, adding remaining Y₂O₃ to the post-reaction material exhibited high specific permittivity of 4000 or higher, and other electric characteristics (a dielectric loss tanδ, insulation resistance IR, a CR product, a temperature characteristic of capacitance and an IR accelerated lifetime) were also confirmed to be preferable.

On the other hand, in the comparative example 3, wherein the main component and Y₂O₃ were not brought to react in advance, the specific permittivity became low as 3400, and it was confirmed to be difficult to respond to downsizing and attaining of a larger capacity.

Also, in the reference example 1, wherein a quantity of Y₂O₃ to be brought to react with the main component in advance was changed to 0.25 mole and a quantity of Y₂O₃ to be added to the obtained post-reaction material was changed to 0.15 mole, the specific permittivity was relatively high but results of the temperature characteristic of capacitance and IR accelerated lifetime became poor.

Also, in the reference example 2, wherein a quantity to be brought to react with the main component was changed to 0.40 mole and no Y₂O₃ was added to the obtained post-reaction material, an average crystal grain diameter of the dielectric particles after sintering became large as 0.78µm, and results became poor in the dielectric loss, insulation resistance, CR product, temperature characteristic of capacitance and IR accelerated lifetime.

From the above results, when comparing the examples 6 to 8 with the comparative example 3, it was confirmed that the specific permittivity could be made high while maintaining other electric characteristics (a dielectric loss tanδ, insulation resistance IR, a CR product, a temperature characteristic of capacitance and an IR accelerated lifetime) preferable by bringing the main component material react with a part of the fourth subcomponent material (Y₂O₃) in advance. Also, by comparing the examples 6 to 8 with the reference examples 1 and 2, it was confirmed that it was preferable that a quantity of the fourth subcomponent (Y₂O₃) was in the preferable range of the present invention explained above when producing a post-reaction material and that the remaining fourth subcomponent (Y₂O₃) was added to the obtained post-reaction material.

### Examples 9 to 12 and Reference Examples 3 and 4

Other than using Tb₂O_{3.5} instead of Y₂O₃ as the fourth subcomponent material to be brought to react with the main component material, capacitor samples of examples 9 to 12 and reference examples 3 and 4 were produced in the same way as in the examples 6, 3, 7 and 8 and reference examples 1 and 2. Namely, in the examples 9 to 12 and reference examples 3 and 4, Tb₂O_{3.5} was used as the (pre-added) fourth subcomponent material to be brought to react in advance, and Y₂O₃ was used as the (post-added) fourth subcomponent material to be added to the post-reaction material. On each of the obtained capacitor samples, evaluation was made in the same way as in the example 1 on an average crystal grain diameter of dielectric particles, specific permittivity ε, a dielectric loss tanδ, insulation resistance IR, a CR product, a temperature characteristic of capacitance and an IR accelerated lifetime. The results are shown in Table 3.

Table 3

**Table 3**

| | Main Component BaₘTiO₂₊ₘ | Adding Quantity of Fourth Subcomponent [mole] | | Crystal Grain Diameter in Sintered Body [µm] | Specific Permittivity ε | tan δ [%] | IR [Ω·m] | CR Product [µF·MΩ] | X7R Characteristics | IR Lifetime [h] |
|---|---|---|---|---|---|---|---|---|---|---|
| | m | Pre-added (Tb₂O_{3.5}) | Post-added (Y₂O₃) | | | | | | | |
| Example 9 | 1.000 | 0.02 | 0.38 | 0.29 | 3640 | 6.5 | 1.32E+11 | 4250 | Good | 1.1 |
| Example 10 | 1.000 | 0.05 | 0.35 | 0.30 | 4650 | 8.6 | 1.32E+11 | 5440 | Good | 1.5 |
| Example 11 | 1.000 | 0.10 | 0.30 | 0.30 | 4800 | 12.1 | 1.24E+11 | 5270 | Good | 0.90 |
| Example 12 | 1.000 | 0.15 | 0.25 | 0.34 | 4800 | 11.1 | 1.16E+11 | 4930 | Good | 0.20 |
| Reference Example 3 | 1.000 | 0.25 | 0.15 | 0.37 | 4500 | 13.3 | 1.16E+11 | 4620 | NG | 0.07 |
| Reference Example 4 | 1.000 | 0.40 | 0 | 0.84 | 6200 | 28.4 | 2.48E+10 | 1360 | NG | 0.05 |

| | | | | | | | | | | |
|---|---|---|---|---|---|---|---|---|---|---|
| In Table 3, "aE+b" means "a × 10^{+b}". | | | | | | | | | | |

### Evaluation 3

Table 3 shows an average crystal grain diameter of dielectric particles, specific permittivity ε, a dielectric loss tanδ, insulation resistance IR, a CR product, a temperature characteristic of capacitance and an IR accelerated lifetime of each of the examples 9 to 12 and reference examples 3 and 4. Note that an adding quantity of Tb₂O_{3.5} was expressed by calculating as a conversion of Tb atom in the same way as in Y₂O₃. Also, "aE+b" means "a × 10^{+b}" of insulation resistance IR in Table 3.

From Table 3, even in the case where Tb₂O_{3.5} was used instead of Y₂O₃ as the fourth subcomponent to be brought to react with the main component material in advance, it was confirmed that the same tendency was exhibited.

### Examples 13 to 16 and Reference Examples 5 and 6

Other than using Yb₂O₃ instead of Y₂O₃ as the fourth subcomponent material to be brought to react with the main component material, capacitor samples of examples 13 to 16 and reference examples 5 and 6 were produced in the same way as in the examples 6, 3, 7 and 8 and reference examples 1 and 2. Namely, in the examples 13 to 16 and reference examples 5 and 6, Yb₂O₃ was used as the (pre-added) fourth subcomponent material to be brought to react in advance, and Y₂O₃ was used as the (post-added) fourth subcomponent material to be added to the post-reaction material. On each of the obtained capacitor samples, evaluation was made in the same way as in the example 1 on an average crystal grain diameter of dielectric particles, specific permittivity ε, a dielectric loss tanδ, insulation resistance IR, a CR product, a temperature characteristic of capacitance and an IR accelerated lifetime. The results are shown in Table 4.

**Table 4**

| | Main Component BaₘTiO₂₊ₘ | Adding Quantity of Fourth Subcomponent [mole] | | Crystal Grain Diameter in sintered Body [µm] | Specific Permittivity ε | tan δ % [%] | IR [Ω·m] | CR Product [µ F·MΩ] | X7R Characteristics | IR Lifetime [h] |
|---|---|---|---|---|---|---|---|---|---|---|
| | m | Pre-added (Yb₂O₃) | Post-added (Y₂O₃) | | | | | | | |
| Example 13 | 1.000 | 0.02 | 0.38 | 0.31 | 3700 | 6.2 | 1.48E+11 | 4850 | Good | 1.2 |
| Example 14 | 1.000 | 0.05 | 0.35 | 0.31 | 4500 | 8.5 | 1.48E+11 | 5900 | Good | 1.3 |
| Example 15 | 1.000 | 0.10 | 0.30 | 0.34 | 4300 | 10.2 | 1.40E+11 | 5330 | Good | 1.0 |
| Example 16 | 1.000 | 0.15 | 0.25 | 0.35 | 4500 | 10.5 | 1.32E+11 | 5260 | Good | 1.0 |
| Reference 5 Example 5 | 1.000 | 0.25 | 0.15 | 0.36 | 4700 | 11.0 | 1.20E+11 | 4990 | NG | 0.07 |
| Reference Example 6 | 1.000 | 0.40 | 0 | 0.65 | 5500 | 17.0 | 3.56E+10 | 1730 | NG | 0.06 |

| | | | | | | | | | | |
|---|---|---|---|---|---|---|---|---|---|---|
| In Table 4, means "a × 10+b". | | | | | | | | | | |

### Evaluation 4

Table 4 shows an average crystal grain diameter of dielectric particles, specific permittivity ε, a dielectric loss tanδ, insulation resistance IR, a CR product, a temperature characteristic of capacitance and an IR accelerated lifetime of each of the examples 13 to 16 and reference examples 5 and 6. Note that an adding quantity of Yb₂O₃ was expressed by calculating as a conversion of Yb atom in the same way as in Y₂O₃. Also, "aE+b" means "a × 10^{+b}" of insulation resistance IR in Table 4.

From Table 4, even in the case where Yb₂O₃ was used instead of Y₂O₃ as the fourth subcomponent to be brought to react with the main component material in advance, it was confirmed that the same tendency was exhibited.

### Examples 17 to 20

Other than using Dy₂O₃, Ho₂O₃, Gd₂O₃ and Eu₂O₃ instead of Y₂O₃ as the fourth subcomponent material to be brought to react with the main component material in advance, capacitor samples of examples 17 to 20 were produced in the same way as in the example 3. Namely, Dy₂O₃ was used as the (pre-added) fourth subcomponent to be brought to react in advance in the example 17, Ho₂O₃ was used in the example 18, Gd₂O₃ was used in the example 19 and Eu₂O₃ was used in the example 20. In all cases in the examples 17 to 20, Y₂O₃ was used as the (post-added) fourth subcomponent to be added to the post-reaction material. On each of the obtained capacitor samples, evaluation was made in the same way as in the example 1 on an average crystal grain diameter of dielectric particles, specific permittivity ε, a dielectric loss tanδ, insulation resistance IR, a CR product, a temperature characteristic of capacitance and an IR accelerated lifetime. The results are shown in Table 5.

Table 5

**Table 5**

| | Main Component BaₘTiO₂₊ₘ | Fourth Subcomponent | | | | Crystal Grain Diameter in Sintered Body [µm] | Specific Permittivity ε | tan δ [%] | IR Ω·m] | CR Product [µF·MΩ] | X7R Characteristics | IR Lifetime [h] |
|---|---|---|---|---|---|---|---|---|---|---|---|---|
| | | Pre-added | | Post-added | | | | | | | | |
| | m | Adding Compound | Adding Quantity [mol] | Adding Compound | Adding Quantity [mol] | | | | | | | |
| Example 17 | 1.000 | Dy₂O₃ | 0.05 | Y₂O₃ | 0.35 | 0.32 | 3700 | 6.2 | 1.48E+11 | 4850 | Good | 1.6 |
| Example 18 | 1.000 | Ho₂O₃ | 0.05 | Y₂O₃ | 0.35 | 0.30 | 4500 | 8.5 | 1.48E+11 | 5900 | Good | 1.3 |
| Example 19 | 1.000 | Gd₂O₃ | 0.05 | Y₂O₃ | 0.35 | 0.33 | 4600 | 10.2 | 1.40E+11 | 5700 | Good | 2.0 |
| Example 20 | 1.000 | Eu₂O₃ | 0.05 | Y₂O₃ | 0.35 | 0.31 | 3800 | 10.5 | 1.32E+11 | 4440 | Good | 1.8 |

| | | | | | | | | | | | | |
|---|---|---|---|---|---|---|---|---|---|---|---|---|
| In Table 5, "aE+b" means "a × 10^{+b}" | | | | | | | | | | | | |

### Evaluation 5

Table 5 shows an average crystal grain diameter of dielectric particles, specific permittivity ε, a dielectric loss tanδ, insulation resistance IR, a CR product, a temperature characteristic of capacitance and an IR accelerated lifetime of each of the examples 17 to 20. Note that an adding quantity of each of Dy₂O₃, Ho₂O₃, Gd₂O₃ and Eu₂O₃ was expressed by calculating as a conversion of each atom in the same way as in Y₂O₃. Also, "aE+b" means "a × 10^{+b}" of insulation resistance IR in Table 5.

From Table 5, even in the cases where the rare earth oxides as above were used instead of Y₂O₃ as the fourth subcomponent to be brought to react with the main component material in advance, it was confirmed that the same results as that in the case of Y₂O₃ were obtained.

## Claims

1. A production method of a dielectric ceramic composition for producing a dielectric ceramic composition comprising
a main component including barium titanate expressed by a composition formula of BaₘTiO₂₊ₘ, wherein "m" satisfies 0.990 < m < 1.010, and
a fourth subcomponent including an oxide of R (note that R is at least one kind selected from Y, La, Ce, Pr, Nd, Pm, Sm, Eu, Gd, Tb, Dy, Ho, Er, Tm, Yb and Lu);
wherein a material of said main component is brought to react with at least a part of a material of said fourth subcomponent in advance to obtain a post-reaction material and the post-reaction material is used for the production method.

2. The production method of a dielectric ceramic composition as set forth in claim 1, wherein a material of said main component and at least a part of a material of said fourth subcomponent are dispersed as solid solution in advance to obtain a post-reaction material and the post-reaction material is used for the production method.

3. The production method of a dielectric ceramic composition as set forth in claim 1 or 2, comprising the steps of:
preparing a post-reaction material obtained by bringing a material of said main component react with a part of a material of said fourth subcomponent to be included in said dielectric ceramic composition in advance; and
adding to said post-reaction material remaining material of said fourth subcomponent to be included in said dielectric ceramic composition.

4. The production method of a dielectric ceramic composition as set forth in any one of claims 1 to 3, wherein a content of said fourth subcomponent in finally obtained said dielectric ceramic composition is 0.1 to 10 moles when calculated as a conversion of R with respect to 100 moles of said main component.

5. The production method of a dielectric ceramic composition as set forth in any one of claims 1 to 4, wherein a content of said fourth subcomponent to be brought to react with a material of said main component in advance is 0 to 0.5 mole (note that 0 is not included) when calculated as a conversion of R with respect to 100 moles of said main component.

6. The production method of a dielectric ceramic composition as set forth in any one of claims 1 to 5, wherein a ratio of said fourth subcomponent to be brought to react with a material of said main component in advance is 0 to 50 mole% (note that 0 and 50 are not included) when calculated as a conversion of R with respect to a total amount of 100 mole% of said fourth subcomponent to be finally included in said dielectric ceramic composition.

7. The production method of a dielectric ceramic composition as set forth in any one of claims 1 to 6, wherein:
said dielectric ceramic composition furthermore comprises
a first subcomponent including at least one kind selected from MgO, CaO, BaO and SrO,
a second subcomponent including SiO₂ mainly and at least one kind selected from MO (note that M is at least one kind selected from Mg, Ca, Ba and Sr), Li₂O and B₂O₃, and
a third subcomponent including at least one kind selected from V₂O₅, MoO₃ and WO₃;
wherein ratios of the respective subcomponents with respect to 100 moles of said main component are
the first subcomponent: 0.1 to 5 moles,
the second subcomponent: 0.1 to 12 moles, and
the third subcomponent: 0 to 0.3 mole (note that 0 is not included).

8. The production method of a dielectric ceramic composition as set forth in claim 7, wherein:
said dielectric ceramic composition furthermore comprises a fifth subcomponent including at least one kind selected from MnO and Cr₂O₃; and
a ratio of the fifth subcomponent with respect to 100 moles of said main component is 0.05 to 1.0 mole.

9. The production method of a dielectric ceramic composition as set forth in any one of claims 1 to 8, wherein a material having an average particle diameter of 0.05 to 0.5µm is used as a material of said main component.

10. A dielectric ceramic composition produced by the method as set forth in any one of claims 1 to 9.

11. An electronic device comprising a dielectric layer composed of the dielectric ceramic composition as set forth in claim 10.
